# EUROPÄISCHE PATENTANMELDUNG

(11) **EP 4 333 363 A1**
(43) Veröffentlichungstag der Anmeldung: **06.03.2024**
(21) Anmeldenummer: 22193111.6
(22) Anmeldetag: 31.08.2022
(51) Int. Cl.: H04L 9/32

(54) **VERFAHREN ZUR AUSSTELLUNG EINES ZERTIFIKATS UND COMPUTERIMPLEMENTIERTE REGISTRIERUNGSSTELLE**

(71) Anmelder: Siemens Aktiengesellschaft, 80333 München (DE)
(72) Erfinder: Palmin, Anna, 76187 Karlsruhe (DE)
(74) Vertreter: Siemens Patent Attorneys

(57) **Zusammenfassung**

Vorgeschlagen wird ein Verfahren zur Ausstellung eines Zertifikats mit einem bestimmten Zertifikatsprofil an eine Anlagenkomponente (2) einer technischen Anlage durch eine Zertifizierungsstelle (6) der technischen Anlage, umfassend:
- Übermitteln eines von der Anlagenkomponente (2) gestellten und von ihr signierten Zertifikatsantrags, in welchem die Ausstellung des Zertifikats mit dem bestimmten Zertifikatsprofil für die Anlagenkomponente (2) beantragt wird, an einen Stellvertreterdienst (3) der technischen Anlage,
- Prüfung durch den Stellvertreterdienst (3), ob der an ihn übermittelte Zertifikatsantrag korrekt ist und eine korrekte Signatur aufweist,
- Für den Fall, dass die Prüfungen erfolgreich sind, Signieren und Weiterleiten des Zertifikatsantrags an eine Registrierungsstelle der technischen Anlage durch den Stellvertreterdienst (3),
- Prüfung durch die Registrierungsstelle (4), ob der an sie übermittelte Zertifikatsantrag korrekt ist und eine korrekte Signatur aufweist,
- Für den Fall, dass die Prüfungen erfolgreich sind, Prüfung durch die Registrierungsstelle (4), ob das bestimmte Zertifikatsprofil von der Anlagenkomponente (2) in der technischen Anlage verwendet werden kann, indem geprüft wird, ob das bestimmte Zertifikatsprofil in einem dem Stellvertreterdienst (3) zugewiesenen Antragstellerprofil enthalten ist,
- Für den Fall, dass die Prüfung erfolgreich ist, Übermitteln des Zertifikatsantrags an die Zertifizierungsstelle (6) durch die Registrierungsstelle (4), welche für den Fall einer erfolgreichen Prüfung des Zertifikatsantrags das beantragte Zertifikat mit dem bestimmten Zertifikatsprofil für die Anlagenkomponente (2) ausstellt.

## Beschreibung

Die Erfindung betrifft ein Verfahren zur Ausstellung eines Zertifikats mit einem bestimmten Zertifikatsprofil. Außerdem betrifft die Erfindung einen computerimplementierten Registrierungsdienst und ein System.

Sichere Kommunikationsprotokolle wie z.B. HTTPS oder OPC UA finden zunehmend Einzug in technischen Anlagen (genauer gesagt sowohl in den diskreten als auch in den verfahrenstechnischen Anlagen). Die Verwendung dieser Protokolle setzt die Benutzung von sog. digitalen Zertifikaten nach dem Standard X.509 voraus.

Neben der sicheren Kommunikation ist für den optimalen Schutz einer (industriellen) technischen Anlage die Einhaltung einer sicheren Gerätekonfiguration im Einklang mit verschiedenen Security-Anforderungen wie z.B. "Security by Default" und "Least Functionality" erforderlich. Gemäß den aktuellen Security-Konzepten werden die Anlagenkomponenten vor der Inbetriebnahme im Einklang mit dem Security-Konzept der Anlage unter Verwendung der sog. Herstellergerätezertifikate (IDevID Cert. nach IEEE802.1AR) auf die Originalität geprüft, provisioniert und anschließend sicher (d.h. gemäß dem o.g. Security-Konzept und darauf basierenden Security-Policies) konfiguriert. Erst dann dürfen die Anlagenkomponenten die erforderlichen kundenspezifischen Zertifikate (LDevID Cert nach IEEE802.1AR) beantragen und anschließend mit ihren Kommunikationspartnern unter Verwendung dieser Zertifikate sicher kommunizieren.

Die Komponenten einer technischen Anlage kommunizieren in der Regel mit mehr als einem Kommunikationspartner und nutzen dabei mehr als ein sicheres Kommunikationsprotokoll. Beispielsweise kann ein industrielles Automatisierungssystem (AS) in der Regel sein webbasiertes User Interface per HTTPS für den Benutzerzugriff bereitstellen (wobei ein zugehöriges TLS Server Zertifikat zum Einsatz kommt) und gleichzeitig (in Rolle des OPC UA Server) per OPC UA mit den zugehörigen OPC UA-Clients kommunizieren. Deswegen sollten die Anlagenkomponenten in der Regel mehrere Zertifikate (LDevID Cert.) beantragen, wobei es aus Security-Sicht empfehlenswert ist, ein dedizierts Zertifikat pro Verwendungszweck zu beantragen bzw. zu nutzen.

Die Beantragung von den für die Kommunikation benötigten Zertifikaten erfolgt nach den aktuellen PKI-Konzepten über eine Registrierungsstelle (engl. Registration Authority (RA)), die die Rolle eines intelligenten Gateways spielt. Intelligente Anlagenkomponenten (wie z.B. Netzwerkkomponenten oder Industrial Controller sowie OS-/ES-Server und Industrial Edge-Komponenten), die ein Zertifikatsmanagementprotokoll wie z.B. das Certificate Management Protocol (CMP) nach RFC 4210 bzw. nach dem Lightweight CMP Profile unterstützen, generieren dazu einen entsprechenden Zertifikatsantrag und übermitteln diesen an die Registrierungsstelle.

Da in der Regel jedes zu einem bestimmten Zweck ausgestellte Zertifikat während seines Lebenszyklus nicht nur initial beantragt, sondern auch erneuert und/oder revoziert werden soll/kann, bietet beispielswese das o.g. CMP-Protokoll verschiedene sog. CMP-Messages, anhand deren die jeweilige Art des Zertifikatsantrags (bzw. der jeweilige zugrundeliegende Use Case) erkannt werden kann. Bekommt die Registrierungsstelle beispielsweise eine sog. IR-Message ("Initial Request") von einer Anlagenkomponente zugeschickt, so erkennt sie daran, dass es sich um eine initiale (erstmalige) Beantragung eines bestimmten Zertifikats handelt. An einer KUR- bzw. RR-Message erkennt sie einen Antrag zur Erneuerung bzw. zur Revokation eines bestehenden Zertifikats.

Auch wenn alle Zertifikatstypen wie TLS Server, TLS Client, OPC UA Server oder OPC UA Client Zertifikate aus rein technischer Sicht von einer gleichen Zertifizierungsstelle (engl. Certification Authority (CA)) ausgestellt werden könnten, wird im Hinblick auf Security eine Trennung und somit die Verwendung einer dedizierten Zertifizierungsstelle pro Verwendungszweck bzw. pro Kommunikationsprotokoll (wie z.B. TLS, OPC UA) empfohlen. Der Grund besteht darin, dass, wenn ein Gerät mehrere verschiedene Zertifikate für verschiedene Zwecke bzw. mehrere vom Gerät verwendete Kommunikationsprotokolle nutzt, die von derselben Zertifizierungsstelle ausgestellt wurden und diese Zertifizierungsstelle kompromittiert wird, das Gerät über kein sicheres Kommunikationsprotokoll mehr kommunizieren kann, denn sein (einziges) von einer kompromittierten Zertifizierungsstelle ausgestelltes und beglaubigtes Zertifikat gilt somit als nicht mehr vertrauenswürdig.

Auch in dem Fall, wenn gemäß der o.g. Empfehlung verschiedene Zertifizierungsstellen zum Ausstellen von Zertifikaten zu verschiedenen Verwendungszwecken/ Kommunikationsprotokollen zum Einsatz kommen, erfolgt die Zertifikatsbeantragung in der Regel über eine (zentrale) Registrierungsstelle (RA). Dabei kann die Registrierungsstelle den Verwendungszweck des anvisierten Zertifikats beispielsweise anhand der Inhalte des Zertifikatsantrags oder anhand des http-/https-Pfades, über welchen sie den Zertifikatsantrag erhält, erkennen.

Falls eine entsprechende Konfiguration vorgenommen wurde, kann die Registrierungsstelle in der Regel die verschiedenen Zertifikatsanträge an die verschiedenen zuständigen Zertifizierungsstellen weiterleiten. Hierzu ist es zu erwähnen, dass bei der Nutzung des CMP-Protokolls es prinzipiell möglich ist, dass die Anlagenkomponenten die zu adressierende Zertifizierungsstelle im Feld "recipient" entsprechend angeben. Dies setzt jedoch voraus, dass sie verschiedene Zertifizierungsstellen und deren Zuordnung zu den verschiedenen Zertifikatsprofilen "kennen", was in der Praxis eher selten der Fall ist. Normalerweise ist den Anlagenkomponenten nur die Registrierungsstelle (oder im Falle von segmentierten Netzwerken die zuständige lokale Registrierungsstelle (LRA)) als Ansprechpartner für die Zertifikatsbeantragung bekannt.

Die Registrierungsstelle prüft die bei ihr eingehenden Zertifikatsanträge in der Regel wie folgt:
(I) Prüfung, ob es einen Inventory-Eintrag zum Antragsteller gibt, der bestimmte im Zertifikatsantrag enthaltenen Daten, die den Antragsteller identifizieren (insb. dessen ID), im Inventory der Registrierungsstelle (oder einem dedizierten Inventory) enthält, d.h. ob der Antragsteller ihr bekannt ist. Falls das Ergebnis der Prüfung nicht ok ist: Zertifikatsantrag wird abgelehnt. Falls das Ergebnis der Prüfung ok ist, gehe zu Schritt II.
(II) Prüfung, ob der Zertifikatsantrag, genauer gesagt dessen Signatur nach RFC5280, korrekt und valide ist (was grob bedeutet, dass die Signatur des Zertifikatsantrags zum Zertifikatsantrag "passt"). Falls das Ergebnis der Prüfung nicht ok ist: Zertifikatsantrag wird abgelehnt. Falls das Ergebnis der Prüfung ok ist, gehe zu Schritt (III).
(III) Prüfung, ob das zum Signieren des Zertifikatsantrags verwendete Zertifikat von einer (der Registrierungsstelle bekannten) Zertifizierungsstelle ausgestellt wurde, zu der die Registrierungsstelle bereits eine Vertrauensbeziehung hat (was beispielsweise bedeuten kann, dass die zugehörige "Certificate Chain" in der Konfiguration der Registrierungsstelle und/oder deren "Certificate Store" entsprechend abgelegt ist). Falls das Ergebnis der Prüfung nicht ok ist: Zertifikatsantrag wird abgelehnt. Falls das Ergebnis der Prüfung ok ist, wird der Zertifikatsantrag an die entsprechende Zertifizierungsstelle (die z.B. in der CMP-Message genannt oder in der Konfiguration angegeben ist) weitergeleitet.

In heterogenen industriellen IoT-/OT-Umgebungen, in denen Komponenten verschiedener Hersteller sowie verschiedene standardisierten Kommunikationstechnologien (wie z.B. PROFINET, TSN, OPC UA, ...) zum Einsatz kommen, und die ggf. stark segmentiert sind, können aktuell nicht alle einzelnen Anlagenkomponenten direkt bei der Registrierungsstelle unter Verwendung eines von der Registrierungsstelle unterstützten Zertifikatsmanagement-Protokolls Zertifikate beantragen. Somit sind nach den aktuellen Konzepten verschiedene Ansätze für die Herstellung einer Vertrauensbeziehung zwischen den verschiedenen Anlagenkomponenten und der Registrierungsstelle sowie einem zentralen Geräteinventar, und zur Beantragung von bestimmten Zertifikaten über einen adäquaten Stellvertreter bekannt.

Ein erster Ansatz betrifft die Anlagenkomponenten, die alle benötigten Zertifikate (oder bestimmte / ausgewählte benötigte Zertifikate wie z.B. das sog. LDevID-Generic-Zertifikat) nicht unter Verwendung eines Zertifikatsmanagementprotokolls beantragen können, sondern die Zertifikate beispielsweise ausschließlich über die entsprechenden OPC-UA- oder (perspektivisch) PROFINET-Mechanismen oder andere (ggf. proprietäre) Mechanismen beziehen können. Derartige Anlagenkomponenten können an die Public Key Infrastruktur der OT-Umgebung (oder der übergeordneten IT-Umgebung), die man häufig als das PKI-Backend bezeichnet, über eine geeignete Infrastruktur-Komponente (z.B. einen Registrar Agent) angebunden werden.

Die Rolle einer derartigen Infrastruktur-Komponenten (eines solchen "Registrar Agents") kann in einer heterogenen industriellen IoT-/OT-Umgebung beispielsweise im OPC UA-Kontext der sog. "OPC UA Registrar" und/oder der und/oder der sog. "OPC UA Global Discovery Server"(GDS) zur Laufzeit übernehmen. Im Profinet-Kontext erfüllt der sog. "Security Infrastructure Handler" (SIH) eine vergleichbare Aufgabe.

Da die Registrierungsstelle der o.g. Infrastruktur-Komponente (z.B. dem Registrar Agent im Rahmen der sicheren Geräteprovisionierung oder dem OPC UA GDS zur Laufzeit) vertraut, wird der Antragsteller nach einer erfolgreichen Validierung des ersten, für diesen stellvertretend erstellten Zertifikatsantrags in das zentrale Geräteinventar oder ihr lokales Registrierungsstelleninventar aufgenommen.

Dieser Ansatz zeichnet sich dadurch aus, dass auch alle weiteren Zertifikate für die Anlagenkomponenten, die nicht direkt das von der Registrierungsstelle unterstützte Zertifikatsmanagement-Protokoll unterstützen, über einen Stellvertreter (einen Registrar, eine lokale Registrierungsstelle (LRA) oder einen SIH) bezogen werden.

Eine wichtige Voraussetzung für die Zertifikatsbeantragung über einen Stellvertreter gemäß diesem Ansatz besteht darin, dass eine Vertrauensbeziehung zwischen dem jeweiligen Stellvertreter und der PKI-Komponente (beispielsweise der Registration Authority, kurz: RA, oder der Certification Authority, kurz: CA), bei der der Stellvertreter die Zertifikate beantragt, besteht. Eine derartige Vertrauensbeziehung kann beispielsweise zertifikatsbasiert realisiert werden. Gemäß einer möglichen Realisierung unter Verwendung des CMP-Protokolls (beispielsweise bei der Verwendung des CMP Protokolls zur Anbindung der OPC UA-Geräte an die PKI), dass der RA das sog. CMP Signing-Zertifikat des jeweiligen Stellvertreters, mit dem dieser die Zertifikatsanträge signiert, als ein vertrauenswürdiges Zertifikat bekannt sein soll (was insb. bedeutet, dass dieses CMP Signing-Zertifikat von einer vertrauenswürdigen CA ausgestellt wurde). Falls HTTPS als Transportprotokoll zum Einsatz kommt, soll auch sichergestellt sein, dass das vom Stellvertreter verwendete TLS Client Zertifikat ebenfalls von einer der RA bekannten, vertrauenswürdigen CA ausgestellt wurde. Dies ist beispielsweise dann der Fall, wenn die Zertifikate der jeweiligen Issuing CAs und der übergeordneten Root CA im Certificate Store der RA (und ggf. zusätzlich in der Konfiguration der RA abgelegt sind.)

Eine weitere wichtige Voraussetzung besteht darin, dass der jeweilige Stellvertreter eine Vertrauensbeziehung zu den Anlagenkomponenten aufweist, die er vertritt. Somit kann die stellvertretende Beantragung eines ersten Zertifikats für eine Komponente prinzipiell erfolgen, ohne, dass diese Komponente der RA explizit bekannt ist und die RA der Komponente explizit vertraut. Stattdessen stellt die RA bei der Validierung des Zertifikatsantrags fest, dass dieser Zertifikatsantrag von einem vertrauenswürdigen Stellvertreter kommt und leitet diesen Antrag an die entsprechende CA weiter, was dazu führt, dass die CA basierend auf diesem Antrag ein Zertifikat für die Anlagenkomponente ausstellt, welches dann über die RA und anschließend über den zuständigen Stellvertreter an die Anlagenkomponente übermittelt wird.

Ein zweiter Ansatz betrifft Anlagenkomponenten, die zwar ein Zertifikatsmanagement-Protokoll (beispielsweise das sog. CMP-Protokoll oder das sog. EST-Protokoll) beherrschen, jedoch im Rahmen oder unmittelbar nach deren Provisionierung / deren "Onboarding" (beispielsweise durch einen Registrar Agent) von der Registrierungsstelle als eine zentrale PKI-Instanz, über die die Zertifikate in der Einsatzumgebung beantragt werden, noch nicht (vollständig) autorisiert werden könne. Dies kann beispielsweise daran liegen, dass sie noch nicht im zentralen Geräteinventar eingetragen sind. Ein "Registrar Agent", der eine Vertrauensbeziehung zu der Registrierungsstelle hat, kann die Validierung und Autorisierung eines ersten von einer derartigen Komponente generierten Zertifikatsantrags übernehmen und diesen Zertifikatsantrag (zusätzlich signiert mit seinem eigenen Zertifikat) an die Registrierungsstelle weiterleiten. Da die Registrierungsstelle dem "Registrar Agent" vertraut, wird der Antragsteller nach einer erfolgreichen Validierung des Zertifikatsantrags in das zentrale Geräteinventar oder in das lokale Registrierungsstelleninventar aufgenommen.

Ein dritter Ansatz betrifft Anlagenkomponenten, die zwar ein Zertifikatsmanagement-Protokoll (beispielsweise das sog. CMP-Protokoll oder das sog. EST-Protokoll) beherrschen, jedoch im Rahmen oder unmittelbar nach deren Provisionierung / deren Onboarding von der Registrierungsstelle noch nicht (vollständig) autorisiert werden können. Derartige Anlagenkomponenten können nach einer erfolgreichen Originalitätsprüfung von einem "Registrar Agent" (oder einem Provisionierungstool), der selbst zwar das o.g. Zertifikatsmanagement-Protokoll nicht unterstützt oder teilweise unterstützt (wobei er beispielsweise die CMP-Nachrichten nicht selbst signieren, sondern nur die CMP-Nachrichten von den Anlagenkomponenten validieren und weiterleiten kann), jedoch eine Vertrauensbeziehung zum zentralen Geräteinventar der Einsatzumgebung oder dem lokalen Registrierungsstelleninventar - beispielsweise über einen TLS Client Zertifikat auf dem Transport-Layer - hat, in das zentrale Geräteinventar oder das lokale Registrierungsstelleninventar eingetragen werden. Dazu kann ein Inventardienst, der beispielsweise die "REST API" und/oder weitere standardisierte Schnittstellen nutzt, zum Einsatz kommen.

In der WO 2022/028975 A1 ist ein System zum Verifizieren von Komponenten eines industriellen Systems offenbart.

In der EP 3 258 662 A1 ist ein Verfahren zur Registrierung eines intelligenten elektrischen Gerätes bei einer Zertifizierungsstelle offenbart.

Die US 5 745 574 A offenbart eine Sicherheitsinfrastruktur mit einer Vielzahl an Zertifizierungsstellen.

Die EP 3 287 925 A1 offenbart eine Computervorrichtung zum Übertragen eines Zertifikats auf ein Gerät in einer Anlage.

In der WO 2020/078750 A1 ist ein Verfahren zum sicheren Betreiben eines industriellen Automatisierungsgeräts in einem Automatisierungssystem offenbart. Im Rahmen dessen wird eine Registrierungsstelle zum Entgegennehmen und Weiterleiten von Zertifikatsanträgen beschrieben.

Ein in der unveröffentlichten Patentanmeldung EP 22161420 beschriebener Lösungsansatz ermöglicht zwar, dass ein vertrauenswürdiger Stellvertreter (z.B. ein Registrar oder eine LRA) - als eine Anlagenkomponente, die als Endgerät Zertifikate direkt beantragen kann - anhand der ihm zugewiesenen zertifikatsspezifischen Geräte- und Antragstellerprofile die notwendigen Zertifikate (beispielsweise ein LDevID-Generic-Zertifikat und ein sog. LDevID-CMP Signing-Zertifikat sowie ein sog. LDevID-TLS Client-Zertifikat) für sich selbst über die Registrierungsstelle beziehen kann.

Ein Problem besteht jedoch darin, dass die Anlagenkomponenten, die alle (oder bestimmte) zur Ausführung ihrer Aufgaben erforderlichen Zertifikate über einen vertrauenswürdigen Stellvertreter (beispielsweise gemäß den oben beschriebenen drei Ansätzen), z.B.
▪ über ein Provisioning-Tool/einen "Registrar Agent" im Rahmen einer Registrierung oder
▪ über eine lokale Registrierungsstelle (LRA) zur Laufzeit einer technischen Anlage beantragen und/oder von einem Registrar Agent (z.B. über einen Inventory Service, der eine oder mehrere standardisierte Schnittstellen) in das zentrale Geräteinventar eingetragen werden, durch den oben erwähnten, in der EP 22161420 beschriebenen Lösungsansatz nicht abgedeckt sind. Dies liegt daran, dass
▪ diese Komponenten (insbesondere bei der Beantragung eines ersten Zertifikats der Registrierungsstelle nicht bekannt sind, und
▪ diesen Komponenten keine Antragstellerprofile zugewiesen sind.

Dies hat insbesondere zur Folge, dass
▪ in bestimmten Szenarien die Validierung der durch einen bestimmten Stellvertreter eingereichten Zertifikatsanträge durch die Registrierungsstelle fehlschlägt, da die Registrierungsstelle die Anlagenkomponente nicht (vollständig) autorisieren kann;
▪ die Ausstellung von unnötigen / überflüssigen Zertifikaten ermöglicht werden kann, da jeder erfolgreich validierte Zertifikatsantrag genehmigt wird und somit jedes beantragte Zertifikat ausgestellt wird - auch wenn es nicht benötigt wird oder sogar zu unterbinden wäre. Beispielsweise könnte eine Anlagenkomponente zwar aufgrund deren Funktionsumfangs ihren Webserver veröffentlichen, auch wenn dies aus Security-Gründen in einer bestimmten OT-/IIoT-Umgebung verboten sein kann.

Durch die unnötige Vergabe von Zertifikaten können sich insbesondere die folgenden Probleme ergeben:
- Erhöhtes Kommunikationsaufkommen (der ggf. zur Gefährdung des Normalbetriebs und der Verfügbarkeit der technischen Anlage führen kann), da die Anlagenkomponenten im Rahmen der initialen Beantragung unnötigen Zertifikatsanträge an die Registrierungsstelle übermitteln, welche diese dann an die zuständige Zertifizierungsstelle weiterleitet, die dann die überflüssigen Zertifikate über die Registrierungsstelle an die Antragsteller übermittelt, und da alle ausgestellten (u.a. auch die überflüssigen) Zertifikate kurz vor deren Ablauf erneuert werden, was wiederum zu einem unnötigen Verwaltungsaufwand/ Kommunikationsaufkommen führt;
- Erhöhter Speicherbedarf der Anlagenkomponenten, die alle überflüssigen Zertifikate in ihrem "Certificate Store" und die zugehörigen kryptographischen Schlüssel im zugehörigen "Key Store" (im Idealfall hardwaregebunden) ablegen, wobei dieses Problem insb. bei ressourcenarmen Geräten (engl. "Constraint Devices") als besonders gravierend gilt; und
- Erhöhter Speicherbedarf im zentralen Geräteinventar bzw. im "Certificate Repository" der technischen Anlage, wo nach den aktuellen Vorgaben alle in der jeweiligen Umgebung ausgestellten Zertifikate aufbewahrt werden sollen.

Der Erfindung liegt die Aufgabe zugrunde, ein Verfahren zur Ausstellung eines Zertifikats für eine Anlagenkomponente einer technischen Anlage anzugeben, dass die zuvor ausgeführten Nachteile vermeidet und ein effizienteres Zertifikatsmanagement der technischen Anlage ermöglicht.

Diese Aufgabe wird gelöst durch ein Verfahren mit den Merkmalen des Anspruchs 1. Außerdem wird die Aufgabe gelöst durch ein Verfahren mit den Merkmalen des Anspruchs 3. Zudem wird die Aufgabe gelöst durch eine computerimplementierte Registrierungsstelle gemäß Anspruch 14. Zudem wird die Aufgabe gelöst durch ein System gemäß Anspruch 15. Vorteilhafte Weiterbildungen ergeben sich aus den abhängigen Ansprüchen.

Ein erfindungsgemäßes Verfahren zur Ausstellung eines Zertifikats mit einem bestimmten Zertifikatsprofil an eine Anlagenkomponente einer technischen Anlage durch eine Zertifizierungsstelle der technischen Anlage umfasst die folgenden Schritte:
- Übermitteln eines von der Anlagenkomponente gestellten und von ihr signierten Zertifikatsantrags, in welchem die Ausstellung des Zertifikats mit dem bestimmten Zertifikatsprofil für die Anlagenkomponente beantragt wird, an einen Stellvertreterdienst der technischen Anlage,
- Prüfung durch den Stellvertreterdienst, ob der an ihn übermittelte Zertifikatsantrag korrekt ist und eine korrekte Signatur aufweist,
- Für den Fall, dass die Prüfungen erfolgreich sind, Signieren und Weiterleiten des Zertifikatsantrags an eine Registrierungsstelle der technischen Anlage durch den Stellvertreterdienst, wobei die Registrierungsstelle insbesondere als ein Registrierungsdienst ausgebildet ist,
- Prüfung durch die Registrierungsstelle, ob der an ihn übermittelte Zertifikatsantrag korrekt ist und eine korrekte Signatur aufweist,
- Für den Fall, dass die Prüfungen erfolgreich sind, Prüfung durch die Registrierungsstelle, ob das bestimmte Zertifikatsprofil von der Anlagenkomponente in der technischen Anlage verwendet werden kann, indem geprüft wird, ob das bestimmte Zertifikatsprofil in einem dem Stellvertreterdienst zugewiesenen Antragstellerprofil enthalten ist,
- Für den Fall, dass die Prüfung erfolgreich ist, Übermitteln des Zertifikatsantrags an die Zertifizierungsstelle durch die Registrierungsstelle, welche für den Fall einer erfolgreichen Prüfung des Zertifikatsantrags das beantragte Zertifikat mit dem bestimmten Zertifikatsprofil für die Anlagenkomponente ausstellt.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden. Ein Zertifikat wird für den Einsatz einer Anlagenkomponente in der technischen Anlage von einer Zertifizierungsstelle ausgestellt, die auch als eine sogenannte "Issuing CA (Certification Authority)" bezeichnet wird. Eine derartige Issuing CA ist in der Regel stets online und stellt, basierend auf eingehenden Zertifikatsanträgen, Zertifikate für diverse Antragsteller aus, die sie mit ihrem eigenen Issuing CA Zertifikat signiert. Die Vertrauenswürdigkeit der Issuing CA wird dadurch sichergestellt, dass ihr eigenes Issuing CA Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die Root CA die meiste Zeit offline ist und nur dann - unter der Einhaltung strengster Sicherheitsvorkehrungen - aktiviert bzw. eingeschaltet wird, wenn sie ein Zertifikat für eine zugehörige Issuing CA ausstellen soll. Die Root CA kann sich außerhalb der technischen Anlage befinden.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei der Anlagenkomponente der technischen Anlage kann es sich um ein beliebiges Gerät oder eine computerimplementierte Applikation handeln, die für eine Kommunikation mit weiteren Komponenten der technischen Anlage der Authentifizierung durch eines oder mehrere Zertifikate bedarf. Anlagenkomponenten der technischen Anlage können beispielsweise Vorrichtungen wie Pumpen, Ventile, Motoren, Heizkessel und dergleichen, aber auch Softwareprogramme sein.

Um ein Zertifikat zu erhalten, das die Anlagenkomponente zur Interaktion mit weiteren Anlagenkomponenten innerhalb der technischen Anlage benötigt, muss die Anlagenkomponente einen an die Zertifizierungsstelle gerichteten Zertifikatsantrag stellen. Der Zertifikatsantrag stellt mit anderen Worten einen Antrag der Anlagenkomponente an die Zertifizierungsstelle der technischen Anlage dar, der Anlagenkomponente ein Zertifikat auszustellen. Dieser Antrag wird unter den genannten Bedingungen mittelbar, d.h. unter Verwendung eines Stellvertreterdienstes und einer Registrierungsstelle, an die Zertifizierungsstelle geleitet.

Das Zertifikat weist ein bestimmtes Zertifikatsprofil (engl. Certificate Profile) auf. Dabei umfasst das Zertifikatsprofil einen Typ des Zertifikats. Bei einem Typ kann es sich beispielsweise um ein TLS (Transport Layer Security) Server Zertifikat, ein TLS Client Zertifikat, ein OPC UA (Open Platform Communications Unified Architecture) Server Zertifikat oder um ein OPC UA Client Zertifikat handeln. Gemäß dem zugewiesenen Zertifikatstyp und ggf. weiteren zusätzlichen Anforderungen kann das Zertifikatsprofil bestimmte Zertifikatsattribute gemäß dem ITU-T-Standard X.509 und deren Werte umfassen. Dabei wird bei der Validierung anhand dieses Zertifikatsprofils jeder Zertifikatsantrag abgelehnt, der nicht alle festgelegten Attribute und Werte beinhaltet. Je mehr Attribute und/oder Werte durch das Zertifikatsprofil vorgeschrieben / festgelegt sind, desto strikter und genauer ist die Validierung.

Im Rahmen der Erfindung wird automatisiert geprüft, ob das bestimmte Zertifikatsprofil von der Anlagenkomponente verwendet werden kann. Im Rahmen dieser Prüfung wird dabei überprüft, ob das bestimmte Zertifikatsprofil in einem dem Stellvertreterdienst zugewiesenen Antragstellerprofil enthalten ist. Nur für den Fall, dass die Prüfung erfolgreich ist, wird der Zertifikatsantrag von der Registrierungsstelle an die Zertifizierungsstelle weitergeleitet, welche für den Fall einer erfolgreichen Prüfung des Zertifikatsantrags das beantragte Zertifikat mit dem bestimmten Zertifikatsprofil für die Anlagenkomponente ausstellt.

Durch das zuvor erläuterte Verfahren wird ermöglicht, dass die über (ggf. viele verschiedene) Stellvertreter eingehenden Zertifikatsanträge stellvertreter-/protokoll-/komponentenfamilienspezifisch validiert werden. Somit kann einerseits sichergestellt werden, dass die Validierung stattfindet. Andererseits kann die Ausstellung von unnötigen Zertifikaten dadurch unterbunden werden, dass die zugrundeliegende Zertifikatsanträgen im Rahmen der Validierung von der Registrierungsstelle abgelehnt und nicht an die Zertifizierungsstelle weitergeleitet werden. Folglich werden nur die (gemäß der Konfiguration und den Vorgaben/Policies) wirklich notwendigen Zertifikatsanträge an die zuständige Zertifizierungsstelle weitergeleitet.

Das erfindungsgemäße Verfahren kann dadurch erfolgreich die Ausstellung von überflüssigen Zertifikaten in der technischen Anlage verhindern, wodurch ein fundierter Beitrag zur Optimierung der Kommunikation und der Aufrechterhaltung des Normalbetriebs und der Verfügbarkeit der technischen Anlage geleistet werden kann.

Vor dem Übermitteln des Zertifikatsantrags an die Zertifizierungsstelle durch die Registrierungsstelle kann automatisiert geprüft werden, ob die Anlagenkomponente zuvor bereits bei der Registrierungsstelle registriert worden ist. Für den Fall, dass die Prüfung nicht erfolgreich ist, kann die Registrierungsstelle die Anlagenkomponente in einem Registrierungsarchiv der Registrierungsstelle registrieren, wobei im Zusammenhang mit der registrierten Anlagenkomponente eine Identität des Stellvertreterdienstes in dem Registrierungsarchiv hinterlegt wird.

Ein weiteres erfindungsgemäßes Verfahren zur Ausstellung eines Zertifikats mit einem bestimmten Zertifikatsprofil an eine Anlagenkomponente einer technischen Anlage durch eine Zertifizierungsstelle der technischen Anlage umfasst die folgenden Schritte:
- Direktes Übermitteln eines von der Anlagenkomponente gestellten und von ihr signierten Zertifikatsantrags, in welchem die Ausstellung des Zertifikats mit dem bestimmten Zertifikatsprofil für die Anlagenkomponente beantragt wird, an eine Registrierungsstelle der technischen Anlage, wobei die Registrierungsstelle insbesondere als ein Registrierungsdienst ausgebildet ist,
- Prüfung durch die Registrierungsstelle, ob der an ihn übermittelte Zertifikatsantrag korrekt ist und eine korrekte Signatur aufweist,
- Für den Fall, dass die Prüfungen erfolgreich sind, Prüfung durch die Registrierungsstelle, ob das bestimmte Zertifikatsprofil von der Anlagenkomponente in der technischen Anlage verwendet werden kann, indem geprüft wird, ob der Anlagenkomponente in der Registrierungsstelle ein Stellvertreterdienst zugeordnet ist und ob das bestimmte Zertifikatsprofil in einem dem Stellvertreterdienst zugewiesenen Antragstellerprofil, welches die direkte Beantragung des Zertifikats bei der Registrierungsstelle durch die Anlagenkomponente betrifft, enthalten ist,
- Für den Fall, dass die Prüfung erfolgreich ist, Übermitteln des Zertifikatsantrags an die Zertifizierungsstelle durch die Registrierungsstelle, welche für den Fall einer erfolgreichen Prüfung des Zertifikatsantrags das beantragte Zertifikat mit dem bestimmten Zertifikatsprofil für die Anlagenkomponente ausstellt.

Eine Registrierungsstelle kann beispielsweise in Form eines Endgerätes mit dem dedizierten Zweck bzw. der dedizierten RA-Funktionalität wie z.B. IoT-Gerätes, eines Industrial PC oder einer Netzwerkkomponente vorliegen. Ein Registrierungsdienst kann beispielsweise ein Service im Rahmen einer Microservicearchitektur repräsentieren. Man spricht dabei beispielsweise von "Foundational Services", die in einer (cloudbasierten) Umgebung verschiedenen Anwendungen zur Verfügung stehen. Einen solchen Registrierungsdienst beinhaltet beispielsweise die "Administration Console" des Prozessleitsystems "PCS neo" der Firma SIEMENS.

Im Unterschied zum zuvor erläuterten Verfahren übermittelt die Anlagenkomponente den an die Zertifizierungsstelle gerichteten Zertifikatsantrag direkt an die Registrierungsstelle (ohne einen Stellvertreterdienst zu nutzen). Die Registrierungsstelle führt daraufhin dieselbe Prüfung wie zuvor erläutert durch - mit der zusätzlichen Bedingung, dass der Anlagenkomponente zuvor ein Stellvertreterdienst zugeordnet worden sein muss. Diese Zuordnung muss der Registrierungsstelle bekannt gemacht worden sein (beispielsweise durch einen Eintrag in ein lokales Inventar der Registrierungsstelle) .

Die Registrierungsstelle kann das ausgestellte Zertifikat in einem zentralen Inventar der technischen Anlage oder in einem lokalen Inventar der Registrierungsstelle hinterlegen. Zusätzlich zu dem ausgestellten Zertifikat kann die Registrierungsstelle das Antragstellerprofil und eine Identität des Stellvertreterdienstes in dem zentralen Inventar der technischen Anlage oder in dem lokalen Inventar der Registrierungsstelle hinterlegen.

Das dem Stellvertreter zugewiesene Antragstellerprofil kann in einem zentralen Inventar der technischen Anlage oder in einem lokalen Inventar der Registrierungsstelle hinterlegt sein. Es muss lediglich von der Registrierungsstelle abrufbar sein, damit diese die zuvor genannten Prüfungen vornehmen kann.

Das Antragstellerprofil kann die Zertifikatsprofile, die erlaubt sind, wenn ein Zertifikatsantrag über den Stellvertreter an die Registrierungsstelle übermittelt wird, und die Zertifikatsprofile, die erlaubt sind, wenn ein Zertifikatsantrag direkt von einer bei der Registrierungsstelle registrierten Anlagenkomponente an die Registrierungsstelle übermittelt wird, beinhalten.

Die in dem Antragstellerprofil enthaltenen Zertifikatsprofile können von einem Betreiber/Operator der technischen Anlage in vorgebbar sein. Hierfür kann sich der Operator beispielsweise einer Nutzeroberfläche der Registrierungsstelle mit geeigneten Eingabemasken bedienen. Alternativ oder zusätzlich kann auf der Grundlage einer Automatisierung der technischen Anlage automatisch vorgegeben werden, welche Zertifikatsprofile in dem Antragstellerprofil enthalten sind. In der Automatisierung sind typischerweise Kommunikationsbeziehungen zwischen den einzelnen Anlagenkomponenten der technischen Anlage beschrieben, die einen direkten Einfluss darauf haben, welche Zertifikatstypen die Anlagenkomponenten jeweils benötigen. Beispielsweise die Registrierungsstelle kann diese Automatisierung, genau genommen eine entsprechende Datei, auslesen und automatisch in dem Antragstellerprofil hinterlegten. Hierzu bedarf es keines Eingriffs durch einen Operator, wobei ein solcher jedoch nicht ausgeschlossen ist.

Änderungen an der Automatisierung der technischen Anlage können dabei von einem System erfasst werden, welches auf einem maschinellen Lernen basiert, wobei das System in einem Bedarfsfall automatisch anpasst, welche Zertifikatsprofile in dem Antragstellerprofil enthalten sind.

Durch das Verfahren kann ermöglicht werden, dass in einer OT-Umgebung/ einer (technischen) industriellen Anlage nur die Zertifikate bei der entsprechenden CA beantragt und von dieser ausgestellt werden, die die folgenden Voraussetzungen erfüllen:
▪ Das Zertifikatsprofil bzw. der Zertifikatstyp wird vom Antragsteller durch dessen Funktionsumfang
   unterstützt.
▪ Der Antragsteller benötigt dieses Zertifikat (bzw. dessen Zertifikatsprofil / Zertifikatstyp) im Kontext der jeweiligen industriellen Anlage/ OT-Umgebung.

Dadurch wird die Ausstellung von jeglichen überflüssigen Zertifikaten völlig unterbunden, wodurch ein fundierter Beitrag zu den folgenden signifikanten Verbesserungen geleistet wird:
▪ zur Optimierung/Minimierung des zur Speicherung der Zertifikate im Certificate Store der Anlagenkomponenten benötigten Speicherplatzes
▪ zur Optimierung/Minimierung des zur Speicherung der Zertifikate im Inventory / Repository der OT-Umgebung / der industriellen Anlage benötigten Speicherplatzes
▪ zur Optimierung/Minimierung des Verwaltungsaufwandes zur Verwaltung der in der OT/Umgebung bzw. in der industriellen Anlage ausgestellten Zertifikate (denn auch überflüssige Zertifikate werden aktuell erfahrungsgemäß von den Anlagenkomponenten bzw. von anderen Instanzen auf deren Ablauf überwacht und kurz vor deren Ablauf mit der Unterstützung von RA/CA entsprechend erneuert)
▪ zur Optimierung des Kommunikationsaufkommens (denn unnötige/überflüssige Zertifikatsanträge werden nicht an die RA bzw. die CA weitergeleitet und die anschließende Ausstellung der auf diesen Zertifikatsanträgen basierenden (überflüssigen/unnötigen) Zertifikate sowie die Übermittlung dieser Zertifikate an die Antragsteller finden gar nicht statt.)
▪ zur Aufrechterhaltung des Normalbetriebs und der Verfügbarkeit der OT-Umgebung/Anlage (aufgrund aller o.g. Vorteile)
▪ zur Krypto-Agilität, denn die in der vorliegenden Erfindung eingeführten zertifikatsspezifischen Geräte- und Antragsteller-Profile eine sehr hohe Flexibilität und Konfigurierbarkeit aufweisen, die insb. in dem Fall, wenn ein verwendeter kryprographischer Algorithmus gebrochen wurde oder (z.B. in einem bestimmten Land) nicht zum Einsatz kommen darf, einen schnellen Ersatz dieses Algorithmus durch einen anderen adäquaten Algorithmus ermöglicht.

Bevorzugt wird das Ergebnis der der Prüfungen, ob das bestimmte Zertifikatsprofil in einem dem Stellvertreterdienst zugewiesenen Antragstellerprofil enthalten ist, einem Operator der technischen Anlage visuell dargeboten. Dieser kann daraufhin etwaige Folgeaktionen auslösen, um auf das Ergebnis adäquat zu reagieren.

Das Ergebnis der Prüfungen, ob das bestimmte Zertifikatsprofil in einem dem Stellvertreterdienst zugewiesenen Antragstellerprofil enthalten ist, kann alternativ oder zusätzlich zu der visuellen Ausgabe in einem Archiv der technischen Anlage hinterlegt werden, beispielweise auf einem hierfür ausgebildeten Archivserver.

Der Stellvertreterdienst kann als ein Registrar gemäß den Spezifikationen von OPC UA Global Discovery Server (GDS), und/oder von einem Registrar nach OPC UA Part 21, und/oder nach BRSKI-ANIMA, und/oder nach BRSKI-AE und/oder nach BRSKI-PRM ausgebildet sein.

Die zuvor formulierte Aufgabe wird außerdem gelöst durch eine computerimplementierte Registrierungsstelle oder eine vergleichbare Instanz bzw. einen entsprechend vergleichbaren Service für ein Leitsystem einer technischen Anlage, die dazu ausgebildet ist von einem Stellvertreterdienst oder einer Anlagenkomponente der technischen Anlage einen von der Anlagenkomponente gestellten Zertifikatsantrag zu empfangen,
und die dazu ausgebildet ist, vor dem Übermitteln des Zertifikatsantrages an eine Zertifizierungsstelle der technischen Anlage automatisiert zu prüfen, ob das bestimmte Zertifikatsprofil von der Anlagenkomponente in der technischen Anlage verwendet werden kann, indem geprüft wird, ob das bestimmte Zertifikatsprofil in einem dem Stellvertreterdienst zugewiesenen Antragstellerprofil enthalten ist,
und wobei die Registrierungsstelle dazu ausgebildet ist, für den Fall, dass die Prüfung erfolgreich ist, den Zertifikatsantrag an die Zertifizierungsstelle zu übermitteln,
und wobei die Registrierungsstelle dazu ausgebildet ist, ein in Reaktion auf den Zertifikatsantrag von der Zertifizierungsstelle ausgestelltes Zertifikat an die Anlagenkomponente weiterzuleiten.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber kann das Leitsystem u.a. Mittel zur Visualisierung der verfahrenstechnischen Anlage und zu einem Engineering aufweisen. Unter dem Begriff Leitsystem sind zusätzlich auch weitere Recheneinheiten für komplexere Regelungen und Systeme zur Datenspeicherung und - verarbeitung zu fassen.

Die Registrierungsstelle kann beispielsweise auf einem Operator Station Server eines Leitsystems implementiert sein. Unter einem "Operator Station Server" wird dabei ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Bei dem Operator Station Server kann es sich, ohne sich darauf zu beschränken, um einen SIMATIC PCS 7 Industrial Workstation Server der Firma SIEMENS handeln.

Die zuvor formulierte Aufgabe wird zudem gelöst durch ein System, das eine computerimplementierte Registrierungsstelle, die wie zuvor erläutert ausgebildet ist, eine Zertifizierungsstelle, wenigstens eine Anlagenkomponente, und vorzugsweise wenigstens einen Stellvertreterdienst umfasst, wobei das System dazu ausgebildet ist, ein Verfahren durchzuführen, welches die zuvor erläuterten Verfahrensschritte umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein erstes Ausführungsbeispiel eines erfindungsgemäßen Verfahrens in einer schematischen Darstellung; und

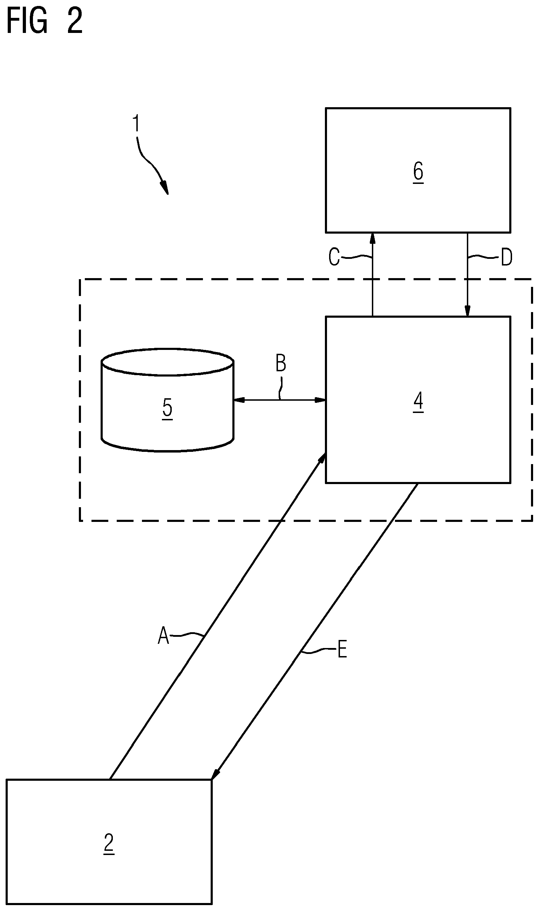

- FIG 2: ein zweites Ausführungsbeispiel eines erfindungsgemäßen Verfahrens in einer schematischen Darstellung.

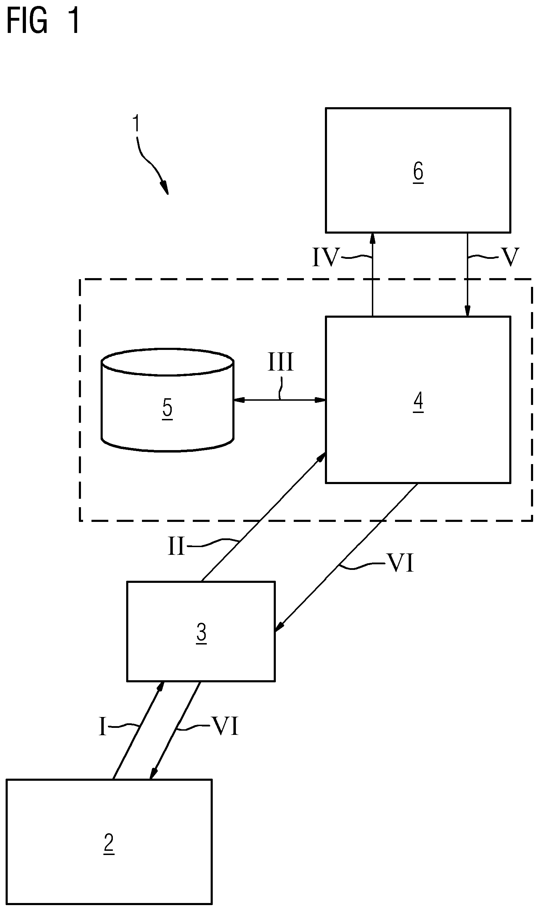

In FIG 1 ist ein System 1 dargestellt, welches eine Anlagenkomponente 2, einen Stellvertreterdienst 3, eine Registrierungsstelle 4, ein in der Registrierungsstelle 4 realisiertes Inventar 5 und eine Zertifizierungsstelle 6 umfasst. Der Stellvertreterdienst 3 und die Registrierungsstelle 4 mit dem Inventar 5 sind beispielsweise auf einem Operator Station Server eines Leitsystems einer technischen Anlage implementiert.

Im Folgenden ist ein erstes Ausführungsbeispiel eines erfindungsgemäßen Verfahrens erläutert: Die Anlagenkomponente 2 weist einen CMP-(Certificate Management Protocol)Client auf, über den die Anlagenkomponente 2 einen Zertifikatsantrag an einen CMP-Server des Stellvertreterdienstes 3 sendet (Schritt I). Dieser Zertifikatsantrag ist an die Zertifizierungsstelle 6 gerichtet und zielt auf die Erstellung eines Zertifikates mit einem bestimmten Zertifikatsprofil ab, welches die Anlagenkomponente für eine Kommunikation innerhalb einer technischen Anlage benötigt. Die Anlagenkomponente 2 signiert den Zertifikatsantrag unter Verwendung des IDevID-Zertifikats (bzw. des dazugehörigen Geheimschlüssels) der Anlagenkomponente 2.

Der Stellvertreterdienst 3, welcher beispielsweise ein BRSKI-Registrar ist, prüft, ob der an ihn übermittelte Zertifikatsantrag korrekt ist und eine korrekte Signatur aufweist. Für den Fall, dass die Prüfungen erfolgreich sind, wird der Zertifikatsantrag von dem Stellvertreterdienst signiert und über einen CMP-Client an einen CMP-Server der Registrierungsstelle 4 der technischen Anlage weitergeleitet (Schritt II). Falls die Prüfungen nicht erfolgreich sind, wird der Zertifikatsantrag abgelehnt bzw. nicht weitergeleitet.

Im Anschluss an die Weiterleitung des Zertifikatsantrags an die Registrierungsstelle 4 findet zunächst eine Prüfung durch die Registrierungsstelle 4 statt, ob der an sie übermittelte Zertifikatsantrag korrekt ist und eine korrekte Signatur aufweist. Falls die Prüfung nicht erfolgreich ist, wird der Zertifikatsantrag abgelehnt bzw. nicht an die Zertifizierungsstelle 6 weitergeleitet.

Im darauffolgenden Schritt (III) findet eine Autorisierung und Validierung des Zertifikatsantrags durch die Registrierungsstelle 4 statt. Die Registrierungsstelle 4 prüft zunächst, ob der Stellvertreterdienst 3 eine Vertrauensbeziehung zu ihr aufweist. Dies kann beispielsweise bedeuten, dass der Stellvertreterdienst 3 in dem Inventar 5 der Registrierungsstelle 4 aufgeführt ist. Falls die Prüfung nicht erfolgreich ist, wird der Zertifikatsantrag abgelehnt bzw. nicht an die Zertifizierungsstelle 6 weitergeleitet.

Daraufhin prüft die Registrierungsstelle 4, ob ihr die den Zertifikatsantrag stellende Anlagenkomponente 2 bekannt ist. Für den Fall, dass die Prüfung nicht erfolgreich ist, wird ein entsprechender Eintrag in dem Inventar 5 angelegt. Für den Fall, dass die Prüfung erfolgreich ist, ist kein neuer Eintrag notwendig. Die Prüfung kann beispielsweise dann erfolgreich sein, wenn die Registrierungsstelle 4 oder ein Benutzer eine erfolgreich geprüfte Anlagenkomponente unmittelbar nach der Prüfung in das Inventar 5 eingetragen haben.

Im Anschluss prüft die Registrierungsstelle 4, ob das bestimmte Zertifikatsprofil von der Anlagenkomponente 2 in der technischen Anlage verwendet werden kann, indem geprüft wird, ob das bestimmte Zertifikatsprofil in einem dem Stellvertreterdienst 3 zugewiesenen Antragstellerprofil enthalten ist. Dieses Antragstellerprofil ist im vorliegenden Ausführungsbeispiel in dem (lokalen) Inventar 5 der Registrierungsstelle 4 hinterlegt. Es kann aber auch in einem zentralen Inventar eines Leitsystems der technischen Anlage hinterlegt sein. Das Antragstellerprofil des Stellvertreterdienstes 3 ist für diesen spezifisch und gilt für alle Anlagenkomponenten, die über diesen Stellvertreterdienst 3 ein Zertifikat beantragen und für die (noch) keine komponentenspezifischen Antragstellerprofile konfiguriert sind.

Falls die Prüfung erfolgreich ist, wird der Zertifikatsantrag an die entsprechende Zertifizierungsstelle 6 (die z.B. in der CMP-Message genannt oder in der Konfiguration im Inventar 5 angegeben ist) weitergeleitet (Schritt IV). Die Zertifizierungsstelle 6 stellt für den Fall einer erfolgreichen Prüfung des Zertifikatsantrags das beantragte Zertifikat mit dem bestimmten Zertifikatsprofil für die Anlagenkomponente 2 aus und übermittelt sie an die Registrierungsstelle 4 (Schritt V) .

Die Registrierungsstelle 4 hinterlegt das ausgestellte Zertifikat in einem zentralen Inventar der technischen Anlage oder in dem lokalen Inventar 5 der Registrierungsstelle 4. Dabei hinterlegt die Registrierungsstelle 4 zusätzlich zu dem ausgestellten Zertifikat das Antragstellerprofil und eine Identität des Stellvertreterdienstes 3.

In einem letzten Schritt (VI) wird das ausgestellte Zertifikat an die Anlagenkomponente 2 übermittelt.

Im Folgenden ist ein zweites Ausführungsbeispiel eines erfindungsgemäßen Verfahrens erläutert: Die Anlagenkomponente 2 weist einen CMP-(Certificate Management Protocol)Client auf, über den die Anlagenkomponente 2 einen Zertifikatsantrag an einen CMP-Server der Registrierungsstelle 4 sendet (Schritt A). Dieser Zertifikatsantrag ist an die Zertifizierungsstelle 6 gerichtet und zielt auf die Erstellung eines Zertifikates mit einem bestimmten Zertifikatsprofil ab, welches die Anlagenkomponente für eine Kommunikation innerhalb einer technischen Anlage benötigt. Die Anlagenkomponente 2 signiert den Zertifikatsantrag unter Verwendung des IDevID-Zertifikats (bzw. des dazugehörigen Geheimschlüssels) der Anlagenkomponente 2.

Im Anschluss an die Weiterleitung des Zertifikatsantrags an die Registrierungsstelle 4 findet zunächst eine Prüfung durch die Registrierungsstelle 4 statt, ob der an sie übermittelte Zertifikatsantrag korrekt ist und eine korrekte Signatur aufweist. Falls die Prüfung nicht erfolgreich ist, wird der Zertifikatsantrag abgelehnt bzw. nicht an die Zertifizierungsstelle 6 weitergeleitet.

Daraufhin erfolgt eine Prüfung durch die Registrierungsstelle 4, ob das bestimmte Zertifikatsprofil von der Anlagenkomponente 2 in der technischen Anlage verwendet werden kann, indem geprüft wird, ob der Anlagenkomponente 2 in der Registrierungsstelle 4 ein Stellvertreterdienst 3 zugeordnet ist und ob das bestimmte Zertifikatsprofil in einem dem Stellvertreterdienst 3 zugewiesenen Antragstellerprofil, welches die direkte Beantragung des Zertifikats bei der Registrierungsstelle 4 durch die Anlagenkomponente 2 betrifft, enthalten ist (Schritt B).

Dieses Antragstellerprofil ist im vorliegenden Ausführungsbeispiel in dem (lokalen) Inventar 5 der Registrierungsstelle 4 hinterlegt. Es kann aber auch in einem zentralen Inventar eines Leitsystems der technischen Anlage hinterlegt sein. Das Antragstellerprofil des Stellvertreterdienstes 3 ist für diesen spezifisch und gilt für alle Anlagenkomponenten, die über diesen Stellvertreterdienst 3 ein Zertifikat beantragen und für die (noch) keine komponentenspezifischen Antragstellerprofile konfiguriert sind.

Wenn eine Anlagenkomponente 2 einmal über den Stellvertreterdienst 3 ein Zertifikat beantragt hat, ist dies, wie anhand des ersten Ausführungsbeispiels erläutert, in dem Inventar 5 hinterlegt und die Registrierungsstelle 4 kann diese Information für ihre Prüfung dem Inventar 5 entnehmen. Die Zuordnung kann aber auch manuell durch einen Administrator/Operator der technischen Anlage in dem Inventar hinterlegt worden sein.

Analog zum ersten Ausführungsbeispiel wird der Zertifikatsantrag im Falle einer erfolgreichen Prüfung an die entsprechende Zertifizierungsstelle 6 (die z.B. in der CMP-Message genannt oder in der Konfiguration im Inventar 5 angegeben ist) weitergeleitet (Schritt C). Die Zertifizierungsstelle 6 stellt für den Fall einer erfolgreichen Prüfung des Zertifikatsantrags das beantragte Zertifikat mit dem bestimmten Zertifikatsprofil für die Anlagenkomponente 2 aus und übermittelt sie an die Registrierungsstelle 4 (Schritt D).

Die Registrierungsstelle 4 hinterlegt das ausgestellte Zertifikat in einem zentralen Inventar der technischen Anlage oder in dem lokalen Inventar 5 der Registrierungsstelle 4. Dabei hinterlegt die Registrierungsstelle 4 zusätzlich zu dem ausgestellten Zertifikat das Antragstellerprofil und eine Identität des Stellvertreterdienstes 3.

In einem letzten Schritt (E) wird das ausgestellte Zertifikat an die Anlagenkomponente 2 übermittelt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Ausstellung eines Zertifikats mit einem bestimmten Zertifikatsprofil an eine Anlagenkomponente (2) einer technischen Anlage durch eine Zertifizierungsstelle (6) der technischen Anlage, umfassend:
- Übermitteln eines von der Anlagenkomponente (2) gestellten und von ihr signierten Zertifikatsantrags, in welchem die Ausstellung des Zertifikats mit dem bestimmten Zertifikatsprofil für die Anlagenkomponente (2) beantragt wird, an einen Stellvertreterdienst (3) der technischen Anlage,
- Prüfung durch den Stellvertreterdienst (3), ob der an ihn übermittelte Zertifikatsantrag korrekt ist und eine korrekte Signatur aufweist,
- Für den Fall, dass die Prüfungen erfolgreich sind, Signieren und Weiterleiten des Zertifikatsantrags an eine Registrierungsstelle der technischen Anlage durch den Stellvertreterdienst (3), wobei die Registrierungsstelle (4) insbesondere als ein Registrierungsdienst ausgebildet ist,
- Prüfung durch die Registrierungsstelle (4), ob der an sie übermittelte Zertifikatsantrag korrekt ist und eine korrekte Signatur aufweist,
- Für den Fall, dass die Prüfungen erfolgreich sind, Prüfung durch die Registrierungsstelle (4), ob das bestimmte Zertifikatsprofil von der Anlagenkomponente (2) in der technischen Anlage verwendet werden kann, indem geprüft wird, ob das bestimmte Zertifikatsprofil in einem dem Stellvertreterdienst (3) zugewiesenen Antragstellerprofil enthalten ist,
- Für den Fall, dass die Prüfung erfolgreich ist, Übermitteln des Zertifikatsantrags an die Zertifizierungsstelle (6) durch die Registrierungsstelle (4), welche für den Fall einer erfolgreichen Prüfung des Zertifikatsantrags das beantragte Zertifikat mit dem bestimmten Zertifikatsprofil für die Anlagenkomponente (2) ausstellt.

2. Verfahren nach Anspruch 1, bei dem vor dem Übermitteln des Zertifikatsantrags an die Zertifizierungsstelle (6) durch die Registrierungsstelle (4) geprüft wird, ob die Anlagenkomponente (2) zuvor bereits bei der Registrierungsstelle (4) registriert worden ist, und wobei die Registrierungsstelle (4) die Anlagenkomponente (2) für den Fall, dass die Prüfung nicht erfolgreich ist, registriert, wobei im Zusammenhang mit der registrierten Anlagenkomponente (2) eine Identität des Stellvertreterdienstes (3) hinterlegt wird.

3. Verfahren zur Ausstellung eines Zertifikats mit einem bestimmten Zertifikatsprofil an eine Anlagenkomponente (2) einer technischen Anlage durch eine Zertifizierungsstelle (6) der technischen Anlage, umfassend:
- Direktes Übermitteln eines von der Anlagenkomponente (2) gestellten und von ihr signierten Zertifikatsantrags, in welchem die Ausstellung des Zertifikats mit dem bestimmten Zertifikatsprofil für die Anlagenkomponente (2) beantragt wird, an eine Registrierungsstelle (4) der technischen Anlage, wobei die Registrierungsstelle (4) insbesondere als ein Registrierungsdienst ausgebildet ist,
- Prüfung durch die Registrierungsstelle (4), ob der an sie übermittelte Zertifikatsantrag korrekt ist und eine korrekte Signatur aufweist,
- Für den Fall, dass die Prüfungen erfolgreich sind, Prüfung durch die Registrierungsstelle (4), ob das bestimmte Zertifikatsprofil von der Anlagenkomponente (2) in der technischen Anlage verwendet werden kann, indem geprüft wird, ob der Anlagenkomponente (2) in der Registrierungsstelle (4) ein Stellvertreterdienst (3) zugeordnet ist und ob das bestimmte Zertifikatsprofil in einem dem Stellvertreterdienst (3) zugewiesenen Antragstellerprofil, welches die direkte Beantragung des Zertifikats bei der Registrierungsstelle (4) durch die Anlagenkomponente (2) betrifft, enthalten ist,
- Für den Fall, dass die Prüfung erfolgreich ist, Übermitteln des Zertifikatsantrags an die Zertifizierungsstelle (6) durch die Registrierungsstelle (4), welche für den Fall einer erfolgreichen Prüfung des Zertifikatsantrags das beantragte Zertifikat mit dem bestimmten Zertifikatsprofil für die Anlagenkomponente (2) ausstellt.

4. Verfahren nach einem der Ansprüche 1 bis 3, bei dem die Registrierungsstelle (4) das ausgestellte Zertifikat in einem zentralen Inventar der technischen Anlage oder in einem lokalen Inventar (5) der Registrierungsstelle (4) hinterlegt.

5. Verfahren nach Anspruch 4, bei dem die Registrierungsstelle (4) zusätzlich zu dem ausgestellten Zertifikat das Antragstellerprofil und eine Identität des Stellvertreterdienstes (3) in dem zentralen Inventar der technischen Anlage oder in dem lokalen Inventar (5) der Registrierungsstelle (4) hinterlegt.

6. Verfahren nach einem der vorangegangenen Ansprüche, bei dem das dem Stellvertreterdienst (3) zugewiesene Antragstellerprofil in einem zentralen Inventar der technischen Anlage oder in einem lokalen Inventar (5) der Registrierungsstelle (4) hinterlegt ist.

7. Verfahren nach einem der vorangegangenen Ansprüche, bei dem das dem Stellvertreterdienst (3) zugewiesene Antragstellerprofil die Zertifikatsprofile beinhaltet, die erlaubt sind, wenn ein Zertifikatsantrag über den Stellvertreterdienst (3) an die Registrierungsstelle (4) übermittelt wird, und die Zertifikatsprofile beinhaltet, die erlaubt sind, wenn ein Zertifikatsantrag direkt von einer bei der Registrierungsstelle (4) registrierten Anlagenkomponente (2) an die Registrierungsstelle übermittelt wird.

8. Verfahren nach einem der vorangegangenen Ansprüche, bei dem von einem Operator der technischen Anlage vorgebbar ist, welche Zertifikatsprofile in dem Antragstellerprofil enthalten sind.

9. Verfahren nach einem der vorangegangenen Ansprüche, bei dem auf der Grundlage einer Automatisierung der technischen Anlage automatisch vorgegeben wird, welche Zertifikatsprofile in dem Antragstellerprofil enthalten sind.

10. Verfahren nach Anspruch 9, bei dem Änderungen an der Automatisierung der technischen Anlage von einem System erfasst werden, welches auf einem maschinellen Lernen basiert, wobei das System in einem Bedarfsfall automatisch anpasst, welche Zertifikatsprofile in dem Antragstellerprofil enthalten sind.

11. Verfahren nach einem der vorangegangenen Ansprüche, bei dem das Ergebnis der Prüfung, ob das bestimmte Zertifikatsprofil in einem dem Stellvertreterdienst (3) zugewiesenen Antragstellerprofil enthalten ist, einem Operator der technischen Anlage visuell dargeboten wird.

12. Verfahren nach einem der vorangegangenen Ansprüche, bei dem das Ergebnis der Prüfungen, ob das bestimmte Zertifikatsprofil in einem dem Stellvertreterdienst (3) zugewiesenen Antragstellerprofil enthalten ist, in einem Archiv der technischen Anlage hinterlegt wird.

13. Verfahren nach einem der vorangegangenen Ansprüche, bei dem der Stellvertreterdienst (3) als ein Registrar gemäß den Spezifikationen von OPC UA Global Discovery Server (GDS), und/oder von einem Registrar nach OPC UA Part 21, und/oder nach BRSKI-ANIMA, und/oder nach BRSKI-AE und/oder nach BRSKI-PRM ausgebildet ist.

14. Computerimplementierte Registrierungsstelle (4) für ein Leitsystem einer technischen Anlage, die dazu ausgebildet ist, von einem Stellvertreterdienst (3) oder einer Anlagenkomponente (2) der technischen Anlage einen von der Anlagenkomponente (2) gestellten Zertifikatsantrag zu empfangen, und die dazu ausgebildet ist, vor dem Übermitteln des Zertifikatsantrages an eine Zertifizierungsstelle (6) der technischen Anlage automatisiert zu prüfen, ob das bestimmte Zertifikatsprofil von der Anlagenkomponente (2) in der technischen Anlage verwendet werden kann, indem geprüft wird, ob das bestimmte Zertifikatsprofil in einem dem Stellvertreterdienst (3) zugewiesenen Antragstellerprofil enthalten ist,
und wobei die Registrierungsstelle (4) dazu ausgebildet ist, für den Fall, dass die Prüfung erfolgreich ist, den Zertifikatsantrag an die Zertifizierungsstelle (6) zu übermitteln, und wobei die Registrierungsstelle (4) dazu ausgebildet ist, ein in Reaktion auf den Zertifikatsantrag von der Zertifizierungsstelle (6) ausgestelltes Zertifikat an die Anlagenkomponente (2) weiterzuleiten.

15. System (1), umfassend eine computerimplementierte Registrierungsstelle (4) gemäß Anspruch 14, eine Zertifizierungsstelle (6), wenigstens eine Anlagenkomponente (2), und vorzugsweise wenigstens einen Stellvertreterdienst (3), wobei das System (1) dazu ausgebildet ist, ein Verfahren gemäß einem der Ansprüche 1 bis 13 durchzuführen.
